# EUROPEAN PATENT SPECIFICATION

(11) **EP 0 564 937 B1**
(45) Date of publication and mention of the grant of the patent: **09.06.1999**
(21) Application number: 93105099.1
(22) Date of filing: 27.03.1993
(51) Int. Cl.: H04B 7/26

(54) **CDMA Radio communication system with pilot signal transmission between base station and handsets for channel distortion compensation**
CDMA-Funkübertragungsanordnung mit Pilotsignalübertragung zwischen Basisstation und Handgeräten zwecks Kanalverzerrungsausgleich
Système de communication radio AMDC avec transmission de signaux pilotes entre la station de base et plusieurs stations mobiles pour compenser la distorsion de canal

(30) Priority: 10.04.1992 GB 9208007
(43) Date of publication of application: 13.10.1993
(73) Proprietor: ROKE MANOR RESEARCH LIMITED, Romsey, Hampshire, SO51 0ZN (GB)
(72) Inventor: Bayes, Terence, Romsey, Hampshire SO51 8BB (GB)
(74) Representative: Allen, Derek

(56) References cited:
- EP-A- 0 443 721
- WO-A-92/00639
- DE-A- 3 908 942
- US-A- 4 539 684
- US-A- 4 912 773

## Description

The present invention relates to radio communication systems in which a base station is in communication with a number of secondary stations and more particularly to code division multiple access cellular mobile communication systems, wherein contemporaneous bi-directional communication is not possible due to the similar comparative amplitudes of received and transmitted signals.

In German patent DE-A-3908942 there is disclosed a process for determining the step response of a transmission channel by the transmission of test sequence signals from a periodically repeated binary pseudo-noise sequence. At the beginning of a correlation the contents of a correlation filter is made zero and in successive timing steps the output signals of an actual timing step are recursively renewed from the output signals of a preceding timing step and scanning values of a scanning value sequence. At the moment of synchronisation of the scanning value sequence estimates for the step response are derived from the corresponding filter output signals.

Code division multiple access together with direct sequence spread spectrum techniques can be used in radio communication systems in which a base station is in communication with a number of secondary stations. Code division multiple access enables a number of secondary stations to communicate with a single base station using the same part of the radio spectrum in an overlaid fashion. The secondary stations are distinguished from one another by the assignment to each secondary station of a unique code. If orthogonal codes are used for spreading, the number of secondary or user, stations which can be accommodated in a single cell cluster of a multi-cellular communication system is equivalent to that obtainable in a time division multiple access system. If random codes are used, then the capacity of the system is reduced somewhat, but, on the other hand, the constraints on the mutual synchronisation between the secondary stations, hereinafter referred to as users, are relaxed somewhat.
This synchronisation is required to allow the code assigned to a particular user to be used to separate a desired signal from that user from signals from other users, which appear as interference on the selected channel.

Radio communication, both in and out of doors is characterised by the reception at a given place of a number of time dispersed versions of a transmitted signal. This phenomenon, which is due to multipath transmission, leads to frequency selective fading and intersymbol interference. If orthogonal code division multiple access techniques are used, then the reception of delayed signals can destroy the code orthogonality, which leads to a base-user link capacity similar to that achievable with the use of random codes.

According to the invention, in one aspect there is provided a method of improving the link capacity of a radio communication system, comprising the operation of transmitting a pilot signal of a known form together with communication signals from a base station to a secondary station, detecting the pilot signals at the secondary station, determining any discrepancies between the transmitted and received pilot signals, operating upon the received pilot signals to restore the received pilot signals to their transmitted form and operating in the same way upon the communication signals so as to remove distortions in the communication signals due to imperfections in the communication channel between the base and secondary stations, said secondary station is adapted to be able to transmit return signals to the base station and prior to transmission the return signals are operated upon in the same way as the signals received by the secondary station from the base station so as to pre-compensate the return signals for distortions due to the imperfections in the communication channel between the base and secondary stations, and wherein the base and secondary stations operate at the same carrier frequency and the time interval between the transmission of outward signals from the base station and the return signals is made to be short enough for reciprocity between the outward and return transmissions to be maintained.

The necessary channel reciprocity is achieved by ensuring that both the base and secondary stations operate at the same carrier frequency and that the time interval between the outward and return transmissions is made as short as is practicable. The base station is caused to transmit during one tune slot and this is followed immediately by a second time slot during which synchronised transmission can be made to the base station by all the secondary stations which may be included in the communication system. The duration of the time slots is made to be short in comparison with the channel coherence time thus satisfying the criteria for channel reciprocity.

According to the invention in another aspect there is provided a radio communication system comprising a base station and a plurality of secondary stations wherein the base station is adapted to transmit a pilot signal of known form together with communication signals and each secondary station includes means for detecting the pilot signals, means for determining discrepancies between the known form of the pilot signals as transmitted by the base station and the form of the pilot signals as received by the secondary station, means for operating upon the received pilot signals to restore them to their form as transmitted by the base station and means for operating in the same way upon the communication signals to compensate them for distortions arising from imperfections in the communication channel between the base and secondary stations.

Preferably the secondary station is adapted to be able to transmit return signals to the base station and there is included means for operating upon the return signals prior to transmission in the same way as the communication signals thereby to precompensate the return signals for the imperfections in the communication channel between the base and secondary stations.

The invention will now be described, by way of example, with reference to the accompanying drawings, in which,
Figure 1 is a block circuit diagram of a signal processing section of a base station or a radio communication system embodying the invention,
FIGURE 2 is a block circuit diagram of a baseband signal processing section of a secondary station in the form of a handset receiver/transmitter,
FIGURE 3 is a block circuit diagram of part of the transmitting section of the handset of Figure 2, and
FIGURE 4 is a block circuit diagram of part of a receiving section of the base station of Figure 1.

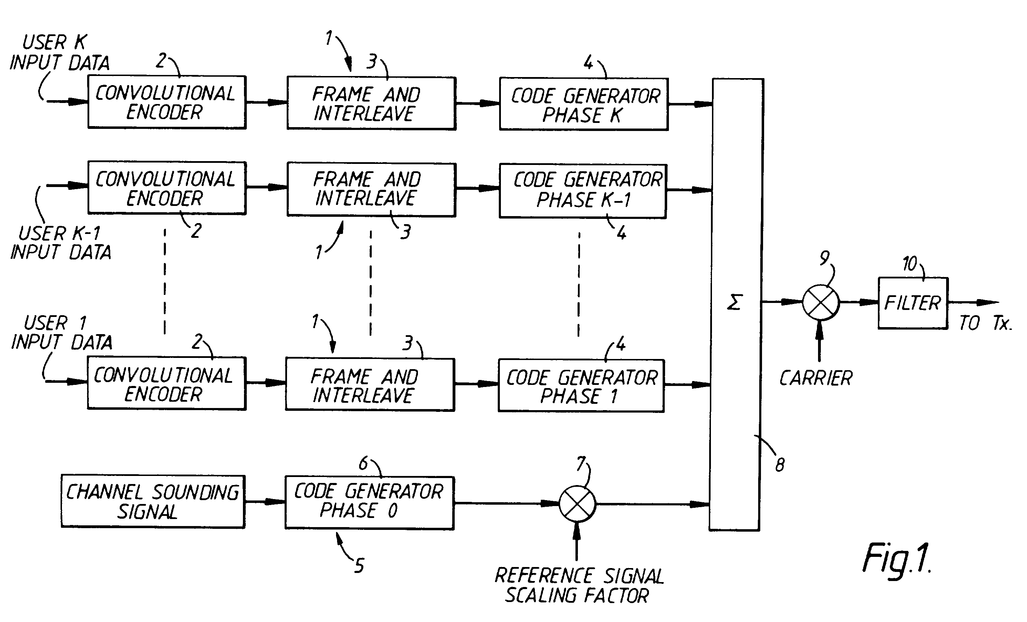

Referring to Figure 1, there is shown a transmitting section of a base station of a radio communication system designed to communicate with a number of secondary user stations 'k' where 'k' is a function of the available bandwidth of the communication system. Each base-user station forward channel (1) includes a convolution encoder (2), a framing and interleaving circuit (3) and a code generator circuit (4), the phase of the code signals generated by any given code generator (4) being related to its respective channel (1). In addition to the user channels (1) there is an additional channel (5) which includes a separate code generator circuit (6) which is used to generate a pilot, channel-sounding, signal of known form which is applied to a scaling circuit (7). The output from the scaling circuit (7) is applied to a mixing circuit (8) to which the outputs from all the user channels (1) also are applied. The output from the mixer (8) is used to modulate a carrier signal generated from a carrier generator circuit (9). The final modulated signal is applied to a transmitter, not shown, via a filter circuit (10).

In use, each user signal modulates its code signal generated by the associated code generator (6) and the resultants are summed in the mixer (8) with the pilot signal from channel (5) prior to transmission.

If desired, the pilot signal can be added to the user signals at a higher power level than the user signals. This will assist synchronisation and recovery of the carrier frequency at the user stations.

Also, if amplitude modulation is used to implement the communication system, then to prevent the complete loss of signal when the amplitude sum of user signals, pilot signals and the carrier signal is zero, the carrier signal can be generated at a non-integral scaling factor compared with the other signals.

The generation of the user identification codes and the summation can be achieved in a number of ways, with separate code generators as shown in Figure 1, or with a scheme of look-up tables and 1's complements adders. This part of the base station readily can be implemented in VLSI, so avoiding the need for RF mixing.

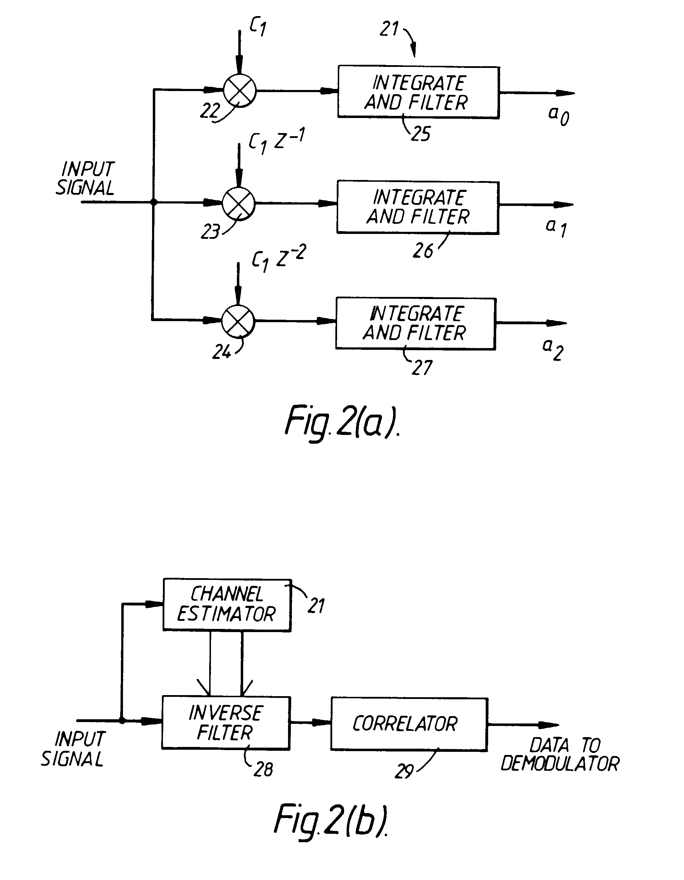

Referring to Figure 2, there is shown, schematically, the signal processing section of a secondary station in the form of a handset receiver/transmitter. Recovery of the carrier signal and down conversion are assumed as the pilot signal and the combination of all the users signals in the communication system enables the recovery of the carrier signal to be implemented in a relatively simple way, for example, by a squaring loop. This is an important feature of the invention as it is then possible to use a frequency divided version of the carrier wave as clock reference throughout the handset receiver. Within the handset receiver there is a channel estimator 21 which includes three correlators 22, 23 and 24 respectively, to which a received input signal from the base station is applied. The correlators 23 and 24 apply delays z⁻¹ and z⁻² to the input signal applied to them. The outputs from the correlators 22, 23 and 24 are applied to respective integrator and filter circuits 25, 26 and 27 and provide output signals a₀, a₁ and a₂ which represent the communication channel characteristics for up to two code chips delay. The signals a₀, a₁ and a₂ are used to set up an inverse filter 28 to which the input signals from the base station also are applied. The inverse filter 28 operates upon the signals received from the base station to remove distortions in the signals received from the base station due to imperfections in the communication channel between the base station and the user station. The corrected signals are applied to a correlator 29 prior to demodulation in any convenient manner.

Code tracking can be achieved by monitoring the peak outputs from the channel estimator 21 and adjusting the time delays of the correlators 23 and 24 accordingly. By this means compensation for changing multipath delays can be achieved.

The reverse, or return, link between the handset and the base station makes use of the channel quality estimate derived by the signal processing section of the handset receiver described above. The channel between the handset and the base station is assumed to be reciprocal in the time division duplex system used in the embodiment of the invention which is being described. This assumption is reasonable because the carrier frequency is common to the forward and return links between the base station and the handsets and the user signal burst intervals are extremely short in comparison with the channel coherence time.

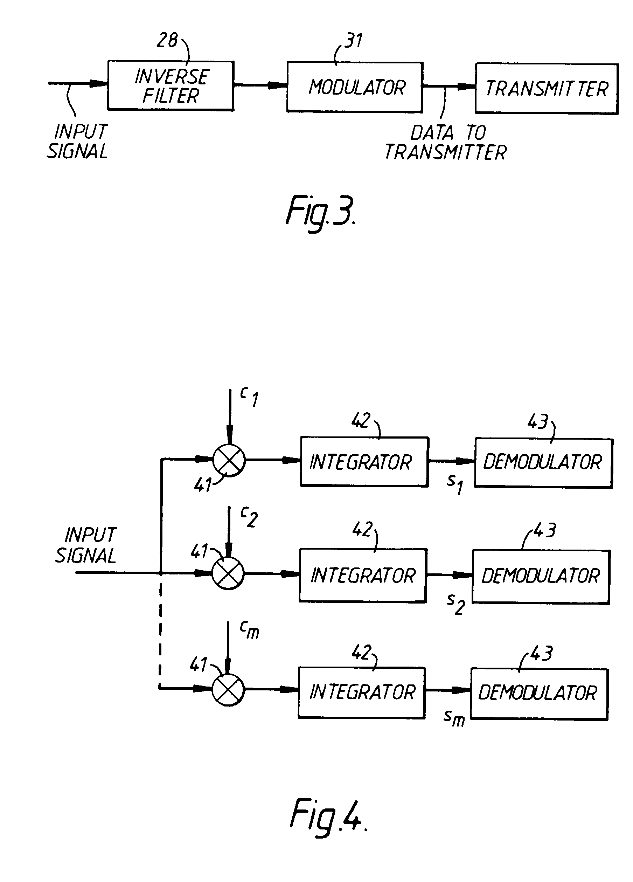

The return link is shown schematically in Figure 3. Speech coding is performed in a manner identical to that employed in the base station forward link and the coded user return signals are applied to the inverse filter 28 which was set up in the signal processing section of the handset receiver. The signals produced by the inverse filter 28 are applied to a modulator 31 before being transmitted by a transmitter part of the handset 32. The inverse filter 28 operates upon the input user signals in such a way as to pre-compensate them for the same imperfections in the channel between the base station and the handset as caused distortions in the forward signal from the base station.

When direct sequence transmissions from each handset in a group are used, generated as described above, it is not necessary to implement any channel compensation in the receiving section of the base station because, in effect, this is performed by the predistortion of the signals from each user handset. The base receiver, which is shown schematically in Figure 4, consists of an array of 'm' correlators 41, the outputs from which are applied to respective integrators 42 and thence to demodulators 43.

## Claims

1. A method of improving the link capacity of a radio communication system, comprising the operations of transmitting a pilot signal of a known form together with communication signals from a base station (Fig 1) to a secondary station, detecting the pilot signals at the secondary station (Fig 2), determining any discrepancies between the transmitted and received pilot signals, responsive to said determining operating upon the received pilot signals to restore the received pilot signals to their transmitted form and operating in the same way upon the communication signals so as to remove distortions in the communication signals due to imperfections in the communication channel between the base and secondary stations, wherein said secondary station is adapted to be able to transmit return signals to the base station and prior to transmission the return signals are operated upon in the same way as the signals received by the secondary station from the base station so as to pre-compensate the return signals for distortions due to imperfections in the communication channel between the base and secondary stations, and wherein the base and secondary stations operate at the same carrier frequency and the time interval between the transmission of outward signals from the base station and the return signals is made to be short enough for reciprocity between the outward and return transmission to be maintained.

2. A radio communication system comprising a base station (Fig 1) and a plurality of secondary stations (Fig 2) wherein the base station is adapted to transmit a pilot signal of known form together with communication signals and each secondary station includes means (22, 23, 24) for detecting the pilot signals, means (21, 25, 26, 27) for determining discrepancies between the known form of the pilot signals as transmitted by the base station and the form of the pilot signals as received by the secondary station, means (28) responsive to said means for determining for operating upon the received pilot signals to restore them to their form as transmitted by the base station and means for operating in the same way upon the communication signals to compensate them for distortions arising from the imperfections in the communication channel between the base and the secondary stations.

3. A radio communication system according to Claim 2 wherein the secondary station is adapted to be able to transmit return signals to the base station and the secondary station includes means for operating upon the return signals prior to transmission in such a manner as to pre-compensate the return signals for distortions arising from the imperfections in the communication channel between the base and secondary station.

4. A radio communication system according to Claim 3 wherein the secondary station is adapted to transmit at the same carrier frequency as the base station.

5. A radio communication system according to Claim 2 or Claim 3 wherein the means for operating upon the signals received by the secondary station so as to compensate them for distortions arising from imperfections in the communication channel between the base and secondary stations is adapted also to operate upon the return signals prior to transmission so as to pre-compensate them for distortions arising from the imperfections in the communication channel between the base and secondary stations.

6. A radio communication system according to any of Claims 2 to 5 wherein the base station includes a plurality of forward communication channels (1), one for each secondary station and a pilot channel for generating a pilot channel sounding signal, each communication channel comprising a convolution encoder (2) to which user signals can be applied, a framing and interleaving circuit (3) and a user code generator circuit (4), the phase of the user code signals generated by a given user code being indicative of its respective communication channel and the pilot signal channel comprising means for generating a pilot signal of a known form, and an associated pilot signal code generator (6), means (8) for mixing coded user signals with the pilot signal, a carrier signal generator (9) the output from which is modulated by the output from the signal mixing circuit (8), an output filter (10) to which the modulated carrier signal is applied and a transmitter stage.

7. A radio communication system according to Claim 6 wherein there is provided means for increasing the power level of the pilot signal relative to the user signals in the communication channels.

8. A radio communication system according to any of Claims 2 to 7 wherein the communication signals are implemented by amplitude modulation of the carrier signal and the carrier signal generator (9) is adapted to generate the carrier signal at a power level which is a non-integral multiple of the power levels of the communication channels (1).

9. A radio communication system according to any of Claims 3 to 8 wherein the secondary station includes means for recovering the carrier signal from the signals received from the base station and means for producing a frequency divided version of the carrier signal for use as a clock reference throughout secondary station.

10. A radio communication system according to any of Claims 2 to 9 wherein the means for detecting the pilot signals and for determining discrepancies between the known form of the pilot signals as transmitted by the base station and as received by the secondary station comprises a channel quality estimator (21) consisting of a plurality of correlators (22, 23, 24) to each of which the signals received from the base station are applied together with correlation signals corresponding to the transmitted pilot signals, each correlation signal having a pre-determined delay compared with the others, an integrator circuit and a filter circuit (25, 26, 27) associated with each correlator and means (28) responsive to the output signals from the channel quality estimator (21) to operate upon the signals received from the base station in such a manner as to remove from the said signals, distortions due to imperfections in the communication channel between the base station and the secondary station.

11. A radio channel communication system according to Claim 10 wherein the means (28) responsive to the output signals from the channel estimator (21) to operate upon the signal comprises an inverse filter set up from the output signals from the channel estimator.

12. A radio communication system according to Claim 11 wherein there is included means for monitoring the peaks of the output signals from the channel quality estimator (21) and adjusting the time delays introduced by the correlators (22, 23, 24) to maintain the said signals within pre-determined limits.

13. A radio communication system according to any of Claims 2 to 12 wherein the secondary station is in the form of a handset.

## Patentansprüche

1. Verfahren zum Verbessern der Verbindungskapazität eines Funkkommunikationssystems, enthaltend die folgenden Operationen: Übertragen eines Schlüsselzeichens bekannter Form zusammen mit Kommunikationssignalen von einer Basisstation (Fig. 1) an eine sekundäre Station, Erfassen der Schlüsselzeichen bei der sekundären Station (Fig. 2), Bestimmen irgendwelcher Unterschiede zwischen den gesendeten und empfangenen Schlüsselzeichen, Bearbeiten der empfangenen Schlüsselzeichen als Antwort auf die Bestimmung, um die empfangenen Schlüsselzeichen in ihrer gesendeten Form wiederherzustellen, und Bearbeiten der Kommunikationssignale in der gleichen Weise, um so Verzerrungen in den Kommunikationssignalen aufgrund von Störungen im Kommunikationskanal zwischen der Basisstation und der sekundären Station zu entfernen, wobei die sekundäre Station so beschaffen ist, daß sie Rückkehrsignale an die Basisstation senden kann, und wobei vor dem Senden die Rückkehrsignale in der gleichen Weise wie die Signale bearbeitet werden, die durch die sekundäre Station von der Basisstation empfangen werden, um so in den Rückkehrsignalen Verzerrungen aufgrund von Störungen in dem Kommunikationskanal zwischen der Basisstation und der sekundären Station im voraus zu kompensieren, und wobei die Basisstation und die sekundäre Station auf der gleichen Trägerfrequenz arbeiten und das Zeitintervall zwischen dem Senden von Ausgangssignalen von der Basisstation und den Rückkehrsignalen kurz genug gemacht wird, damit die Reziprozität zwischen der abgehenden Sendung und der zurückkehrenden Sendung aufrechterhalten wird.

2. Funkkommunikationssystem, mit einer Basisstation (Fig. 1) und mehreren sekundären Stationen (Fig. 2), wobei die Basisstation so beschaffen ist, daß sie zusammen mit Kommunikationssignalen ein Schlüsselzeichen bekannter Form sendet, und jede sekundäre Station versehen ist mit einer Einrichtung (22, 23, 24) zum Erfassen der Schlüsselsignale, einer Einrichtung (21, 25, 26, 27) zum Bestimmen von Unterschieden zwischen der bekannten Form der Schlüsselzeichen, die von der Basisstation gesendet werden, und der Form der Schlüsselzeichen, die von der sekundären Station empfangen werden, einer Einrichtung (28), die als Antwort auf die Bestimmungseinrichtung die empfangenen Schlüsselzeichen in der Weise bearbeitet, daß sie in ihrer Form, wie sie von der Basisstation gesendet wurde, wiederhergestellt werden, sowie einer Einrichtung zum Bearbeiten der Kommunikationssignale in der gleichen Weise, um Verzerrungen in ihnen zu kompensieren, die sich aus Störungen im Kommunikationskanal zwischen der Basisstation und der sekundären Station ergeben.

3. Funkkommunikationssystem nach Anspruch 2, bei dem die sekundäre Station so beschaffen ist, daß sie Rückkehrsignale an die Basisstation senden kann, und die sekundäre Station eine Einrichtung enthält, um die Rückkehrsignale vor dem Senden in der Weise zu bearbeiten, daß in den Rückkehrsignalen Verzerrungen, die sich aus den Störungen im Kommunikationskanal zwischen der Basisstation und der sekundären Station ergeben, im voraus kompensiert werden.

4. Funkkommunikationssystem nach Anspruch 3, in dem die sekundäre Station so beschaffen ist, daß sie auf der gleichen Trägerfrequenz wie die Basisstation sendet.

5. Funkkommunikationssystem nach Anspruch 2 oder Anspruch 3, in dem die Einrichtung zum Bearbeiten der von der sekundären Station empfangenen Signale in der Weise, daß in ihnen vorhandene Verzerrungen, die sich aus Störungen im Kommunikationskanal zwischen der Basisstation und der sekundären Station ergeben, kompensiert werden, so beschaffen ist, daß sie vor dem Senden auch die Rückkehrsignale in der Weise bearbeitet, daß in ihnen Verzerrungen, die sich aus den Störungen im Kommunikationskanal zwischen der Basisstation und der sekundären Station ergeben, im voraus kompensiert werden.

6. Funkkommunikationssystem nach irgendeinem der Ansprüche 2 bis 5, in dem die Basisstation mehrere Vorwärtskommunikationskanäle (1), einen für jede sekundäre Station, und einen Schlüsselkanal zum Erzeugen eines Schlüsselkanal-Tonsignals enthält, wobei jeder Kommunikationskanal einen Faltungscodierer (2), in den Benutzersignale eingegeben werden können, eine Rahmenbildungs- und Verschachtelungsschaltung (3) sowie eine Benutzercode-Generatorschaltung (4) enthält, wobei die Phase der durch einen gegebenen Benutzercode erzeugten Benutzercodesignale dessen jeweiligen Kommunikationskanal angibt, und wobei der Schlüsselzeichenkanal eine Einrichtung zum Erzeugen eines Schlüsselzeichens einer bekannten Form und einen zugeordneten Schlüsselzeichencode-Generator (6), eine Einrichtung (8) zum Mischen der codierten Benutzersignale mit dem Schlüsselzeichen, einen Trägersignalgenerator (9), dessen Ausgang mit dem Ausgang der Signalmischschaltung (8) moduliert wird, ein Ausgangsfilter (10), in das das modulierte Trägersignal eingegeben wird, sowie eine Senderstufe enthält.

7. Funkkommunikationssystem nach Anspruch 6, in dem eine Einrichtung vorgesehen ist, die den Leistungspegel des Schlüsselzeichens in bezug auf die Benutzersignale in den Kommunikationskanälen erhöht.

8. Funkkommunikationssystem nach irgendeinem der Ansprüche 2 bis 7, in dem die Kommunikationssignale durch Amplitudenmodulation des Trägersignals implementiert werden und der Trägersignalgenerator (9) so beschaffen ist, daß er das Trägersignal mit einem Leistungspegel erzeugt, der kein ganzzahliges Vielfaches der Leistungspegel der Kommunikationskanäle (1) ist.

9. Funkkommunikationssystem nach irgendeinem der Ansprüche 3 bis 8, in dem die sekundäre Station eine Einrichtung zum Wiederherstellen des Trägersignals aus den von der Basisstation empfangenen Signalen sowie eine Einrichtung zum Erzeugen einer frequenzgeteilten Version des Trägersignals für die Verwendung als Taktreferenz in der gesamten sekundären Station enthält.

10. Funkkommunikationssystem nach irgendeinem der Ansprüche 2 bis 9, in dem die Einrichtung zum Erfassen der Schlüsselzeichen und zum Bestimmen von Unterschieden zwischen der bekannten Form der Schlüsselzeichen, wie sie von der Basisstation gesendet werden, und jener, die von der sekundären Station empfangen werden, eine Kanalqualität-Schätzeinrichtung (21), die aus mehreren Korrelatoren (22, 23, 24) besteht, wobei in jeden von ihnen die von der Basisstation empfangenen Signale zusammen mit Korrelationssignalen eingegeben werden, die den gesendeten Schlüsselzeichen entsprechen, wobei jedes Korrelationssignal im Vergleich zu den anderen eine vorgegebene Verzögerung aufweist, eine Integratorschaltung und eine Filterschaltung (25, 26, 27), die jedem Korrelator zugeordnet sind, sowie eine Einrichtung (28) enthält, die auf die Ausgangssignale von der Kanalqualität-Schätzeinrichtung (21) anspricht, um die von der Basisstation empfangenen Signale in der Weise zu bearbeiten, daß aus diesen Signalen Verzerrungen entfernt werden, die sich aufgrund von Störungen in dem Kommunikationskanal zwischen der Basisstation und der sekundären Station ergeben.

11. Funkkanal-Verbindungssystem nach Anspruch 10, in dem die Einrichtung (28), die auf die Ausgangssignale von der Kanal-Schätzeinrichtung (21) anspricht, um das Signal zu bearbeiten, ein inverses Filter enthält, das aus den Ausgangssignalen von der Kanal-Schätzeinrichtung gebildet ist.

12. Funkkommunikationssystem nach Anspruch 11, in dem eine Einrichtung zum Überwachen der Spitzen der Ausgangssignale von der Kanalqualität-Schätzeinrichtung (21) und zum Einstellen der Zeitverzögerungen, die durch die Korrelatoren (22, 23, 24) eingeführt werden, um die Signale in vorgegebenen Grenzen zu halten, enthalten ist.

13. Funkkommunikationssystem nach irgendeinem der Ansprüche 2 bis 12, in dem die sekundäre Station die Form eines Telephonhörers hat.

## Revendications

1. Procédé d'augmentation de la capacité en liaisons d'un système de communications radioélectriques, comprenant les opérations suivantes : l'émission d'un signal pilote de forme connue avec des signaux de communication à partir d'une station de base (figure 1) vers une station secondaire, la détection des signaux pilotes à la station secondaire (figure 2), la détermination des écarts éventuels entre les signaux pilotes émis et reçus, en fonction de la détermination, la commande des signaux pilotes reçus pour le rétablissement des signaux pilotes reçus sous leur forme émise et le traitement de la même manière des signaux de communication afin que les distorsions des signaux de communication dues aux imperfections dans le canal de communication entre les stations de base et secondaire soient supprimées, dans lequel la station secondaire est destinée à permettre l'émission de signaux de retour à la station de base et, avant l'émission, les signaux de retour sont traités de la même manière que les signaux reçus par la station secondaire à partir de la station de base afin que les signaux de retour subissent une compensation préalable des distorsions dues aux imperfections du canal de communication entre les stations de base et secondaire, et dans lequel les stations de base et secondaires travaillent à la même fréquence porteuse et l'intervalle de temps compris entre l'émission des signaux vers l'extérieur à partir de la station de base et les signaux de retour est rendu suffisamment court pour que la réciprocité puisse être conservée entre les émissions vers l'extérieur et de retour.

2. Système de communications radioélectriques comprenant une station de base (figure 1) et plusieurs stations secondaires (figure 2), dans lequel la station de base est destinée à émettre un signal pilote de forme connue avec des signaux de communication et chaque station secondaire comporte un dispositif (22, 23, 24) de détection des signaux pilotes, un dispositif (21, 25, 26, 27) destiné à déterminer les écarts entre la forme connue des signaux pilotes émis par la station de base et la forme des signaux pilotes reçus par la station secondaire, un dispositif (28) commandé par le dispositif de détermination et destiné à traiter les signaux pilotes reçus pour les remettre à la forme émise par la station de base, et un dispositif destiné à traiter de la même manière les signaux de communication pour assurer la compensation des distorsions dues aux imperfections du canal de communication entre les stations de base et secondaire.

3. Système de communications radioélectriques selon la revendication 2, dans lequel la station secondaire est destinée à pouvoir émettre les signaux de retour vers la station de base et la station secondaire comporte un dispositif destiné à traiter les signaux de retour avant la transmission de manière que les distorsions dues aux imperfections du canal de communication entre les stations de base et secondaire subissent une compensation préalable dans les signaux de retour.

4. Système de communications radioélectriques selon la revendication 3, dans lequel la station secondaire est destinée à émettre à la même fréquence porteuse que la station de base.

5. Système de communications radioélectriques selon la revendications 2 ou 3, dans lequel le dispositif destiné à traiter les signaux reçus par la station secondaire afin que les distorsions dues aux imperfections du canal de communication entre les stations de base et secondaire soient compensées est aussi destiné à traiter les signaux de retour avant la transmission afin que les distorsions dues aux imperfections du canal de communication entre les stations de base et secondaire soient compensées préalablement.

6. Système de communications radioélectriques selon l'une quelconque des revendications 2 à 5, dans lequel la station de base comprend plusieurs canaux (1) de communication directe, un pour chaque station secondaire et un canal pilote pour la création d'un signal de sonnerie de canal pilote, chaque canal de communication comprenant un codeur de convolution (2) auquel peuvent être appliqués les signaux d'utilisateur, un circuit de mise en trame et d'entrelacement (3) et un circuit (4) de générateur de code d'utilisateur, la phase des signaux de code d'utilisateur créés par le code d'utilisateur déterminé étant représentative de son canal respectif de communication et le canal de signal pilote comprenant un dispositif de création d'un signal pilote de forme connue, et un générateur associé (6) de code de signal pilote, un dispositif (8) destiné à mélanger le signal codé d'utilisateur au signal pilote, un générateur (9) de signal de porteuse dont le signal de sortie est modulé par le signal de sortie du circuit de mélange de signaux (8), un filtre de sortie (10) auquel est appliqué le signal modulé de porteuse, et un étage émetteur.

7. Système de communications radioélectriques selon la revendication 6, dans lequel un dispositif est destiné à augmenter le niveau de puissance du signal pilote par rapport aux signaux d'utilisateur dans les canaux de communication.

8. Système de communications radioélectriques selon l'une quelconque des revendications 2 à 7, dans lequel les signaux de communication sont mis en oeuvre par modulation d'amplitude du signal de porteuse, et le générateur (9) de signal de porteuse est destiné à créer le signal de porteuse avec un niveau de puissance qui est un multiple non entier des niveaux de puissance des canaux de communication (1).

9. Système de communications radioélectriques selon l'une quelconque des revendications 3 à 8, dans lequel la station secondaire comporte un dispositif de récupération du signal de porteuse parmi les signaux reçus de la station de base et un dispositif destiné à produire une version divisée en fréquence du signal de porteuse afin qu'elle soit utilisée comme référence d'horloge dans la station secondaire.

10. Système de communications radioélectriques selon l'une quelconque des revendications 2 à 9, dans lequel le dispositif de détection des signaux pilotes et de détermination des écarts entre la forme connue des signaux pilotes émis par la station de base et reçus par la station secondaire comporte un estimateur (21) de qualité de canal constitué de plusieurs corrélateurs (22, 23, 24) à chacun desquels sont appliqués les signaux reçus de la station de base avec des signaux de corrélation correspondant aux signaux pilotes émis, chaque signal de corrélation ayant un retard prédéterminé comparé aux autres, un circuit intégrateur et un circuit de filtre (25, 26, 27) associé à chaque corrélateur et un dispositif (28) commandé par les signaux de sortie de l'estimateur (21) de qualité de canal pour le traitement des signaux reçus de la station de base d'une manière telle que les distorsions dues aux imperfections du canal de communication entre la station de base et la station secondaire soient retirées des signaux.

11. Système de communications par des canaux radioélectriques selon la revendication 10, dans lequel le dispositif (28) commandé par les signaux de sortie de l'estimateur de canal (21) pour le traitement du signal comprend un filtre inverse établi à partir des signaux de sortie de l'estimateur des canaux.

12. Système de communications radioélectriques selon la revendication 11, dans lequel un dispositif est incorporé afin qu'il contrôle les valeurs de crête des signaux de sortie de l'estimateur (21) de qualité des canaux et d'ajustement des retards temporels introduits par les corrélateurs (22, 23, 24) afin que les signaux soient maintenus entre des limites prédéterminées.

13. Système de communications radioélectriques selon l'une quelconque des revendications 2 à 12, dans lequel la station secondaire est sous forme d'un combiné.
